# EUROPEAN PATENT APPLICATION

(11) **EP 3 048 827 A1**
(43) Date of publication of application: **27.07.2016**
(21) Application number: 15305056.2
(22) Date of filing: 20.01.2015
(51) Int. Cl.: H04W 8/26

(54) **Identity modification**

(71) Applicant: ALCATEL LUCENT, 92100 Boulogne-Billancourt (FR)
(72) Inventor: Rajapandiyan, Karthick, 600096 Chennai (IN); Pandurangan, Harikumar, 600096 Chennai (IN)
(74) Representative: Leppard, Andrew John

(57) **Abstract**

A network node method, a network node, a user equipment method, user equipment and computer program product are disclosed. The network node method comprises receiving a configuration message activating identity modification where a call setup message originating from a user equipment is to be identified as being from a selected one of a plurality of identities corresponding to the user equipment; on receipt of a call setup message from the user equipment, performing the identity modification by generating a modified call setup message by substituting an identity included in the call setup message with the selected identity; and forwarding the modified call setup message with the selected identity. In this way, user equipment may indicate to the network node that identity modification is to be used and which identity is to be included in a modified call set-up message. When the call set-up message is then received, the network node may then substitute the identity within that message with the selected identity and forward this as the modified call set-up message. This enables, for example, dual-SIM user equipment to respond to a missed call on, for example, SIM 1 with a call set-up message from SIM 2 and have that call set-up message from SIM 2 to be identified as being from SIM 1, in order that the call set-up message appears to have come from SIM 1 in order to avoid confusion to the recipient and to avoid the identity of SIM 2 being revealed to that recipient.

## Description

### FIELD OF THE INVENTION

The present invention relates to a network node method, a network node, a user equipment method, user equipment and computer program products.

### BACKGROUND

Internet protocol multimedia Subsystems (IMS) can be used to provide a raft of internet protocol multimedia services such as voice, video, text, instant messaging, games and presence information. In one implementation, IMS utilises a protocol known as the Session Initiation Protocol (SIP) as standardised in the Third Generation Project Partnership (3GPP). A SIP application plane exists for registration and control of a communication session, which handles SIP messages. The SIP application plane then co-ordinates with a media plane. Such IMS services can be provided to mobile user equipment using a packet radio network, which supports packet data communications. User equipment of a wireless telecommunications network can utilise SIP messaging to control and conduct calls. However, as user equipment are able to support a variety of different functionalities, unexpected consequences can occur.

### SUMMARY

According to a first aspect, there is provided a network node method, comprising: receiving a configuration message activating identity modification where a call setup message originating from a user equipment is to be identified as being from a selected one of a plurality of identities corresponding to the user equipment; on receipt of a call setup message from the user equipment, performing the identity modification by generating a modified call setup message by substituting an identity included in the call setup message with the selected identity; and forwarding the modified call setup message with the selected identity.

The first aspect recognizes that one functionality of user equipment is that some are provisioned with two or more Subscriber Identity Modules (SIMs), thereby providing a user equipment with multiple identities. For such dual-SIM user equipment, a call could be made by another party to one of the SIMs but, in order to return the call, there may be a need to do so from another of the SIMs. However, this first aspect also recognises this can lead to confusion on the part of the called party since they are expecting to receive the return call from the originally-called SIM. In addition, this can also be undesirable to the user of the dual SIM user equipment since they may not wish the called party to be provided with the identity of the other SIM.

Accordingly, a method may be provided. The method may be performed by a network node. The method may comprise receiving a configuration message from a user equipment. The user equipment may activate identity modification. The identity modification may be where a call set-up message from the user equipment is to be identified as being from a particular or a selected one of a plurality of different identities corresponding to or associated with the user equipment. The method may also comprise, when a call set-up message is received from the user equipment, that the identity modification is performed. The identity modification may generate a modified call set-up message. The modified call set-up message may have an identity included in the call set-up message being substituted with the selected identity. The method may also comprise forwarding the modified call set-up message having the selected identity. In this way, user equipment may indicate to the network node that identity modification is to be used and which identity is to be included in a modified call set-up message. When the call set-up message is then received, the network node may then substitute the identity within that message with the selected identity and forward this as the modified call set-up message. This enables, for example, dual-SIM user equipment to respond to a missed call on, for example, SIM 1 with a call set-up message from SIM 2 and have that call set-up message from SIM 2 to be identified as being from SIM 1, in order that the call set-up message appears to have come from SIM 1 in order to avoid confusion to the recipient and to avoid the identity of SIM 2 being revealed to that recipient.

In one embodiment, the configuration message identifies the selected identity.

In one embodiment, the configuration message comprises a subscribe message having two fields, a first field encoding that identity modification is to be activated and a second field encoding the selected identity. Accordingly, the configuration message may comprise both a control part and an identity part.

In one embodiment, the plurality of identities comprise a plurality of integrated circuit card identifiers, one for each of a plurality of subscriber identity modules of the user equipment. Hence, one of a number of different identities may be used.

In one embodiment, the plurality of identities comprise a plurality of subscriber identities, one for each of a plurality of subscriber identity modules of the user equipment.

In one embodiment, the plurality identities comprise a plurality of telephone numbers, one for each of a plurality of subscriber identity modules of the user equipment.

In one embodiment, the call setup message comprises an invite message having a display name field and the generating the modified call setup message substitutes the identity included in the display name field with the selected identity. Hence, existing messages maybe used with altered contents.

In one embodiment, the method comprises generating further modified call setup messages with the selected identity on receipt of further call setup messages from the user equipment until receipt of a further configuration message deactivating the identity modification. Hence, the network node may continue to perform the identity modification until this is switched off.

In one embodiment, the method comprises deactivating the identity modification after forwarding the modified call setup message with the selected identity. Accordingly, the network node may perform the identity modification only once.

According to a second aspect, there is provided a network node, comprising: reception logic operable to receive a configuration message activating identity modification where a call setup message originating from a user equipment is to be identified as being from a selected one of a plurality of identities corresponding to the user equipment; modification logic operable, on receipt of a call setup message from the user equipment, to perform the identity modification by generating a modified call setup message by substituting an identity included in the call setup message with the selected identity; and transmission logic operable to forward the modified call setup message with the selected identity.

In one embodiment, the configuration message identifies the selected identity.

In one embodiment, the configuration message comprises a subscribe message having two fields, a first field encoding that identity modification is to be activated and a second field encoding the selected identity.

In one embodiment, the plurality of identities comprise a plurality of integrated circuit card identifiers, one for each of a plurality of subscriber identity modules of the user equipment.

In one embodiment, the plurality of identities comprise a plurality of subscriber identities, one for each of a plurality of subscriber identity modules of the user equipment.

In one embodiment, the plurality identities comprise a plurality of telephone numbers, one for each of a plurality of subscriber identity modules of the user equipment.

In one embodiment, the call setup message comprises an invite message having a display name field and the generating the modified call setup message substitutes the identity included in the display name field with the selected identity.

In one embodiment, the modification logic is operable to generate further modified call setup messages with the selected identity on receipt of further call setup messages from the user equipment until the reception logic receives a further configuration message deactivating the identity modification.

In one embodiment, the modification logic is operable to deactivate the identity modification after forwarding the modified call setup message with the selected identity.

According to a third aspect, there is provided a user equipment method, comprising: transmitting a configuration message to a network node activating identity modification where a call setup message originating from the user equipment is to be identified as being from a selected one of a plurality of identities corresponding to the user equipment.

In one embodiment, the configuration message identifies the selected identity.

In one embodiment, the configuration message comprises a subscribe message having two fields, a first field encoding that identity modification is to be activated and a second field encoding the selected identity.

In one embodiment, the plurality of identities comprise a plurality of integrated circuit card identifiers, one for each of a plurality of subscriber identity modules of the user equipment.

In one embodiment, the plurality of identities comprise a plurality of subscriber identities, one for each of a plurality of subscriber identity modules of the user equipment.

In one embodiment, the plurality identities comprise a plurality of telephone numbers, one for each of a plurality of subscriber identity modules of the user equipment.

In one embodiment, the call setup message comprises an invite message having a display name field and the generating the modified call setup message substitutes the identity included in the display name field with the selected identity.

In one embodiment, the method comprises transmitting a further configuration message deactivating the identity modification.

In one embodiment, the method comprises transmitting the configuration message to the network node activating identity modification in response to a missed call from another user equipment.

In one embodiment, the missed call from another user equipment was for a first of the plurality of subscriber identities and the configuration message activates identity modification where the call setup message originating from the user equipment is to be identified as being from a second of the plurality of identities corresponding to the user equipment.

In one embodiment, the missed call from another user equipment was for a first of the plurality of subscriber identities and the configuration message activates identity modification where the call setup message the originating from the user equipment and having the first of the plurality of subscriber identities is to be identified as being from a second of the plurality of identities corresponding to the user equipment.

In one embodiment, the method comprises transmitting the call setup message having the first of the plurality of subscriber identities and identifying the another user equipment.

According to a fourth aspect, there is provided user equipment, comprising: transmission logic operable to transmit a configuration message to a network node activating identity modification where a call setup message originating from the user equipment is to be identified as being from a selected one of a plurality of identities corresponding to the user equipment.

In one embodiment, the configuration message identifies the selected identity.

In one embodiment, the configuration message comprises a subscribe message having two fields, a first field encoding that identity modification is to be activated and a second field encoding the selected identity.

In one embodiment, the plurality of identities comprise a plurality of integrated circuit card identifiers, one for each of a plurality of subscriber identity modules of the user equipment.

In one embodiment, the plurality of identities comprise a plurality of subscriber identities, one for each of a plurality of subscriber identity modules of the user equipment.

In one embodiment, the plurality identities comprise a plurality of telephone numbers, one for each of a plurality of subscriber identity modules of the user equipment.

In one embodiment, the call setup message comprises an invite message having a display name field and the generating the modified call setup message substitutes the identity included in the display name field with the selected identity.

In one embodiment, the transmission logic is operable to transmit a further configuration message deactivating the identity modification.

In one embodiment, the transmission logic is operable to transmit the configuration message to the network node activating identity modification in response to a missed call from another user equipment.

In one embodiment, the missed call from another user equipment was for a first of the plurality of subscriber identities and the configuration message activates identity modification where the call setup message originating from the user equipment is to be identified as being from a second of the plurality of identities corresponding to the user equipment.

In one embodiment, the missed call from another user equipment was for a first of the plurality of subscriber identities and the configuration message activates identity modification where the call setup message the originating from the user equipment and having the first of the plurality of subscriber identities is to be identified as being from a second of the plurality of identities corresponding to the user equipment.

In one embodiment, the transmission logic is operable to transmit the call setup message having the first of the plurality of subscriber identities and identifying the another user equipment.

According to a fifth aspect, there is provided a computer program product operable, when executed on a computer, to perform the method steps of the first or third aspect.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:

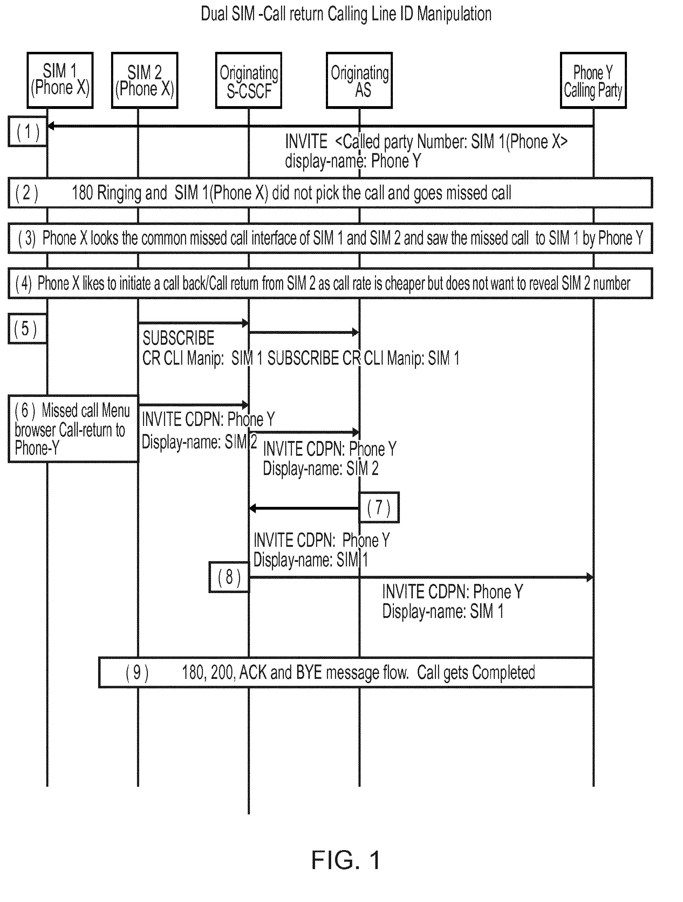

Figure 1 illustrates an example operation of a user equipment and application server according to one embodiment.

### DESCRIPTION OF THE EMBODIMENTS

Before explaining the embodiments in any more detail, first an overview will be provided. Embodiments provide an arrangement where dual SIM user equipment which receive a missed call to a first of those SIMs are able to return a call from another of the SIMs. In particular, the user equipment activates functionality in a network node which instructs the network node to substitute an identity (such as a telephone number, an integrated circuit card identifier, a subscriber identity or the like) included in a call set-up message from the user equipment with a selected identity. The network node, when it receives the call set-up message, then performs the identity modification and substitutes the identity within the call set-up message the selected identity and forwards that modified call set-up message with the selected identity. This enables the user equipment to return a missed call for a first SIM using a second SIM, but manipulates the display number to indicate that the returned call is in fact from the first SIM. This helps to avoid confusion to the recipient of that returned call and avoids revealing the identity of the second SIM.

### Example Operation

Figure 1 illustrates an example operation of a user equipment and application server according to one embodiment.

In this example, the user equipment is dual-SIM phone, where the user uses the phone X for both professional and personal purposes. Hence, SIM 1 is provided for professional purposes and has a professional identity and associated telephone number, whereas SIM 2 is provided for family purposes and has a family identity and associated telephone number. Both SIMs are present simultaneously in the dual-SIM phone allowing the user to make and receive calls using either identity.

At step (1), a professional contact who uses phone Ywishes to make a call to the user of phone X. The professional contact has the telephone number associated with SIM 1. Hence, a call is made from phone Y to SIM 1 of phone X using an INVITE message.

At step (2), the user then receives the call from phone Yto SIM 1. The user could not or did not answer his phone X and so the call is logged by phone X as a missed call.

At step (3), the user goes to the common missed call menu browser and sees the missed call for SIM 1 from phone Y, who is a professional contact.

### Call Return (CR) - Calling Line Identifier (CLI) Manipulation Feature Subscription

At step (4), the user identifies that he would like to return the missed call for SIM 1, but would he would like to initiate the call-return instead from SIM 2 to phone Y. Many different reasons for doing this are envisaged such as the network coverage or quality of service for SIM 1 may be poor, SIM 2's data or calls are reaching its tariff limit, calls from SIM 1 are cheaper, etc. However, the user does not wish to reveal the telephone number associated with SIM 2 since this is used normally for family purposes. Also, the professional contact may not answer a call from the telephone number associated with SIM 2 since this number is not known to him. Hence, the user does not want to reveal the telephone number associated with SIM 2 since the user of phone Ymay get confused as he would be expecting a call-return from the telephone number associated with SIM 1.

At step (5), the user subscribes to a Call Return (CR) - Calling Line Identifier (CLI) manipulation feature with his originating Application Server (AS). This can be done in a variety of different ways. For example, the user may explicitly identify that the missed call to SIM 1 is to be returned from SIM 2, but that SIM 1 should be identified as the CLI. Alternatively, the user equipment may automatically identify the missed call to SIM 1 is to be returned from SIM 2, but that SIM 1 should be identified as the CLI based on preset characteristics, such as pre-programmed user preferences or current network conditions. Accordingly, a SUBSCRIBE message is sent from SIM 2 of phone X to the AS; this is because SIM 2 will make the outgoing call and only SIM 2 wants to be manipulated to SIM 1. Hence, in a multi-SIM environment, the next outgoing call SIM which wants to be manipulated should sent this subscribe message and so the SIM which wants to be manipulated should send subscribe message with manipulated SIM number which is to be displayed to the called party. The SUBSCRIBE message contains two fields, the first of which identifies that the message is subscribing to the CR - CLI manipulation feature and the second of which identifies the identity of the SIM which is to be substituted. In this example, the second field identifies the telephone number associated with SIM 1. The AS will typically verify that both SIM 1 and SIM 2 belong to the same user equipment in order to prevent spoofing.

### Call Return

At step (6), from the common missed call browser menu, the user initiates a call to phone Y from SIM 2, even though the missed call was to SIM 1. An INVITE message is sent from SIM 2 to the originating Serving Call Session Control Function (S-CSCF) and onto the AS. The INVITE message identifies phone Y as the called party number (CDPN) and identifies SIM 2 as the CLI.

### Call Return (CR) - Calling Line Identifier (CLI) Manipulation

At step (7), on receiving the INVITE message, the AS checks to see if the CLI manipulation feature has been activated. In this example, the AS determines that it has and manipulates the CLI in the INVITE message. In particular, the AS changes the CLI to SIM 1, even though the call is from SIM 2 to generate a modified INVITE message. This modified INVITE message is sent from the AS to the S-CSCF.

At step (8), on receiving the modified INVITE message, the S-CSCF tries to establish a call to phone Yby sending the modified INVITE message to phone Y. In other words, the call proceeds from the serving-call session controlling function module to Phone Y with a manipulated display name as SIM 1. Phone Y receives the modified INVITE message which identifies SIM 1 as the CLI and so the professional contact sees the telephone number associated with SIM 1 as the display name, even though the call was initiated using SIM 2.

At step (9), the professional contact answers the call and the call is established.

Depending on implementation, the CLI-CR manipulation feature may be disabled once an attempted call has been made or may remain active until a further SUBSCRIBE message is sent instructing the AS to disable the CLI-CR manipulation feature.

Hence it can be seen that in embodiments, although the call return is initiated from SIM 2, the display number is manipulated with SIM 1 instead of SIM 2, as the actual missed call is for SIM 1. In this way, there is no confusion to the party whose call is missed by a dual SIM served user.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices maybe, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A network node method, comprising:
receiving a configuration message activating identity modification where a call setup message originating from a user equipment is to be identified as being from a selected one of a plurality of identities corresponding to said user equipment;
on receipt of a call setup message from said user equipment, performing said identity modification by generating a modified call setup message by substituting an identity included in said call setup message with said selected identity; and
forwarding said modified call setup message with said selected identity.

2. The method of claim 1, wherein said configuration message identifies said selected identity.

3. The method of claim 1 or 2, wherein said configuration message comprises a subscribe message having two fields, a first field encoding that identity modification is to be activated and a second field encoding said selected identity.

4. The method of any preceding claim, wherein said plurality of identities comprise a plurality of integrated circuit card identifiers, one for each of a plurality of subscriber identity modules of said user equipment.

5. The method of any preceding claim, wherein said plurality of identities comprise a plurality of subscriber identities, one for each of a plurality of subscriber identity modules of said user equipment.

6. The method of any preceding claim, wherein said plurality identities comprise a plurality of telephone numbers, one for each of a plurality of subscriber identity modules of said user equipment.

7. The method of any preceding claim, wherein said call setup message comprises an invite message having a display name field and said generating said modified call setup message substitutes said identity included in said display name field with said selected identity.

8. The method of any preceding claim, comprising generating further modified call setup messages with said selected identity on receipt of further call setup messages from said user equipment until receipt of a further configuration message deactivating said identity modification.

9. The method of any preceding claim, comprising deactivating said identity modification after forwarding said modified call setup message with said selected identity.

10. A network node, comprising:
reception logic operable to receive a configuration message activating identity modification where a call setup message originating from a user equipment is to be identified as being from a selected one of a plurality of identities corresponding to said user equipment;
modification logic operable, on receipt of a call setup message from said user equipment, to perform said identity modification by generating a modified call setup message by substituting an identity included in said call setup message with said selected identity; and
transmission logic operable to forward said modified call setup message with said selected identity.

11. A user equipment method, comprising:
transmitting a configuration message to a network node activating identity modification where a call setup message originating from said user equipment is to be identified as being from a selected one of a plurality of identities corresponding to said user equipment.

12. The method of claim 11, comprising transmitting said configuration message to said network node activating identity modification in response to a missed call from another user equipment.

13. The method of claim 11 or 12, wherein said missed call from another user equipment was for a first of said plurality of subscriber identities and said configuration message activates identity modification where said call setup message originating from said user equipment is to be identified as being from a second of said plurality of identities corresponding to said user equipment.

14. User equipment, comprising:
transmission logic operable to transmit a configuration message to a network node activating identity modification where a call setup message originating from said user equipment is to be identified as being from a selected one of a plurality of identities corresponding to said user equipment.

15. A computer program product operable, when executed on a computer, to perform the method steps of any one of claims 1 to 9 or 11 to 13.

## Amended claims

### Amended claims in accordance with Rule 137(2) EPC.

1. A network node method, comprising:
receiving a (5) configuration message activating identity modification where a call setup message originating from a user equipment is to be identified as being from a selected one of a plurality of identities corresponding to said user equipment, wherein said plurality of identities comprise a plurality of subscriber identities, one for each of a plurality of subscriber identity modules of said user equipment;
on receipt (6) of a call setup message from said user equipment following said configuration message, performing said identity modification (7) by generating a modified call setup message by substituting an identity included in said call setup message with said selected identity; and
forwarding (8) said modified call setup message with said selected identity.

2. The method of claim 1, wherein said configuration message identifies said selected identity.

3. The method of claim 1 or 2, wherein said configuration message comprises a subscribe message having two fields, a first field encoding that identity modification is to be activated and a second field encoding said selected identity.

4. The method of any preceding claim, wherein said plurality of identities comprise a plurality of integrated circuit card identifiers, one for each of a plurality of subscriber identity modules of said user equipment.

5. The method of any preceding claim, wherein said plurality identities comprise a plurality of telephone numbers, one for each of a plurality of subscriber identity modules of said user equipment.

6. The method of any preceding claim, wherein said call setup message comprises an invite message having a display name field and said generating said modified call setup message substitutes said identity included in said display name field with said selected identity

7. The method of any preceding claim, comprising generating further modified call setup messages with said selected identity on receipt of further call setup messages from said user equipment until receipt of a further configuration message deactivating said identity modification.

8. The method of any preceding claim, comprising deactivating said identity modification after forwarding said modified call setup message with said selected identity.

9. A network node, comprising:
reception logic operable to receive a configuration message activating identity modification where a call setup message originating from a user equipment is to be identified as being from a selected one of a plurality of identities corresponding to said user equipment, wherein said plurality of identities comprise a plurality of subscriber identities, one for each of a plurality of subscriber identity modules of said user equipment;
modification logic operable, on receipt of a call setup message from said user equipment following said configuration message, to perform said identity modification by generating a modified call setup message by substituting an identity included in said call setup message with said selected identity; and
transmission logic operable to forward said modified call setup message with said selected identity.

10. A user equipment method, comprising:
transmitting (5) a configuration message to a network node activating identity modification where a call setup message originating from said user equipment is to be identified as being from a selected one of a plurality of identities corresponding to said user equipment, wherein said plurality of identities comprise a plurality of subscriber identities, one for each of a plurality of subscriber identity modules of said user equipment and, following said configuration message, transmitting (6) a call set up message having an identity.

11. The method of claim 11, comprising transmitting said configuration message to said network node activating identity modification in response to a missed call from another user equipment.

12. The method of claim 11 or 12, wherein said missed call from another user equipment was for a first of said plurality of subscriber identities and said configuration message activates identity modification where said call setup message originating from said user equipment is to be identified as being from a second of said plurality of identities corresponding to said user equipment.

13. User equipment, comprising:
transmission logic operable to transmit a configuration message to a network node activating identity modification where a call setup message originating from said user equipment is to be identified as being from a selected one of a plurality of identities corresponding to said user equipment, wherein said plurality of identities comprise a plurality of subscriber identities, one for each of a plurality of subscriber identity modules of said user equipment and, following said configuration message, to transmit a call set up message having an identity.

14. A computer program product operable, when executed on a computer, to perform the method steps of any one of claims 1 to 8 or 10 to 12.
